# EUROPEAN PATENT APPLICATION

(11) **EP 1 258 196 A2**
(43) Date of publication of application: **20.11.2002**
(21) Application number: 02253521.5
(22) Date of filing: 20.05.2002
(51) Int. Cl.: A22B 5/20

(54) **Spinal column removal**

(30) Priority: 18.05.2001 GB 0112199
(71) Applicant: Avocet Engineering Services Limited, Locking, Weston-Super-Mare BS24 9PB (GB)
(72) Inventor: Pole, Andrew L., Avocet Engineering Services Ltd., Locking, Weston Super Mare BS24 9PB (GB)
(74) Representative: Whitaker, Iain Mark

(57) **Abstract**

The present invention provides a band saw (6) for separating at least part of the spinal column from an animal carcass and which comprises an endless saw band (6) mounted to a support (5) for cyclic movement along a closed path, the support being constructed such that part of the material being cut can pass through the region defined within the cyclic path of the saw band; and means for driving the saw band, the saw band is provided with cutting depth limiting means (17) comprising at least one shoulder or projection adjacent the cutting teeth (16) of the saw band (6) which is/are blunt and shorter than the cutting teeth.

## Description

### Field of the Invention

The present invention concerns improvements to apparatus and methods for the separation and removal of at least part of the spinal column from animal carcasses.

### Background to the Invention

The epidemic of BSE infection in cattle in the United Kingdom has been brought under control and the disease generally removed from the national herd following a prolonged period of quarantine and extensive slaughter and destruction of infected parts of the national herd. However, there remains the imperative to minimise any further risks to the health of both workers in the beef industry and consumers. Further occurrences of BSE in continental Europe and elsewhere in recent times highlight the prudence of taking thorough routine precautionary measures to reduce contamination of the meat and the environment with CNS tissue during slaughter and processing of both cattle and sheep. Indeed, the European Commission decision of 1 October 2000 sets in place regulations for all EU member states to ensure that CNS material from sheep carcasses above 12 months old and all cattle carcasses is effectively removed. The regulations include measures for removal of spinal column including dorsal root ganglia from specified groups of cattle.

The present inventor's earlier PCT application, PCT WO 09/39634, and European Patent, EP 0,867,118, the entire contents of which are incorporated herein by reference, discuss briefly the crude nature of the conventional slaughter house practices in which manual or automatic cleavers or saws are used to split or cut open the carcass with the blade passing through the centre line of the carcass and spinal cord. This tends to smear the cut surfaces with cord material and releases small particles.

To substantially eliminate these clearly unacceptable contamination hazards, the PCT application and the European Patent each disclose a novel band saw that is adapted to be used to pass around the spinal column and to be drawn along it for removal of the spinal column without cutting or damaging the spinal cord. The band saw blade is an endless band and is mounted to a substantially rigid, rounded or oval support to follow a continuous path around the support with the cut material passing through the region defined within the path of the blade. The blade itself is suitably formed from a metal/metal alloy (steel) tube that is machined at one end to define the teeth of the saw. In the European patent, the rear edges of the teeth of the saw are driven by a drive pinion of the saw, in use.

Whereas use of the band saw of EP 0,867,118 improves effectiveness, greatly reducing risk of contamination of the cut meat and exposure of the slaughterman to the spinal cord material, extensive trialling of the saw has established that there are problems in operating it to give a smooth and reliable cutting action in each use and to give a long continuous life of operation. The band saw is liable to repeated stalling and is liable to stress fracturing after a relatively short operating life.

### Summary of the Invention

According to a first aspect of the present invention there is provided a band saw for separating at least part of the spinal column from an animal carcass and which comprises an endless saw band mounted to a support for cyclic movement along a closed path, the support being constructed such that part of the material being cut can pass through the region defined within the cyclic path of the saw band; and means for driving the saw band, characterised in that the saw band is provided with cutting depth limiting means comprising at least one shoulder or projection adjacent the cutting teeth of the saw band which is/are blunt and shorter than the cutting teeth.

Preferably the depth limiting means comprises a plurality of depth limiting teeth. These suitably are positioned, at intervals, between cutting teeth and preferably alternate with the cutting teeth.

Preferably the depth limiting teeth have a form substantially similar to the cutting teeth and preferably the depth limiting teeth have a top edge that slopes towards their bottom edge (root) in the direction of cyclic movement of the saw blade, unlike the cutting teeth.

The depth limiting means of the present invention has surprisingly proven to be effective in substantially preventing the stalling of the band saw by restricting the saw from cutting so deep into the bone of the spinal column as to cause the blade to become jammed against the bone. Provision of depth limiting teeth spaced at regular intervals around the saw band ensures that the cutting teeth cut to a substantially uniform depth with each revolution of the band to give a reliable performance.

The stalling problem has, furthermore, now been substantially eradicated by provision of a lubricating oil channel in the band saw between the support for the saw band and the saw band itself. This delivers lubricating oil (or less preferably water) that is suitably pumped by a positive displacement pump that meters the lubricating oil. The lubricating oil channel is preferably formed in the cylindrical outer face preferably in a spiral or part spiral that extends towards the cutting edge of the saw band and that directs the oil to sweep toward the teeth and suitably toward the leading edge of the teeth. This configuration appears to assist in washing bone dust and any other debris away from the teeth. The configuration of the lubricating oil channel substantially prevents build up of detritus that could otherwise form a lacquer with the lubricating oil and lead to seizure of the saw band on the support

This aspect of the invention has merit in its own right independently of the provision of the cutting depth limiting means but is particularly advantageous when used in combination with the cutting depth limiting means.

In one aspect the present invention also encompasses within its scope a saw band/blade on its own or mounted to the support, for use in the band saw of the first aspect of the invention and characterised by having the cutting depth limiting means. Furthermore, in another aspect, the present invention encompasses a saw band/blade with or without the cutting depth limiting means but which has the lubricating oil channel.

The band saw particularly preferably has an electric motor rather than a pneumatic or hydraulic one. It has been found that pneumatic motors have a tendency to freeze in the environment of slaughter houses and hydraulic systems have generally been unwieldy, unmanageable and inefficient.

In one aspect of the invention, or in a preferred embodiment, the band saw has a cutting edge comprising the support for the saw band and the saw band itself and wherein this cutting head is demountable from a main body/drive mechanism housing of the band saw to allow interchangeability of cutting heads. Interchangeability of cutting heads is particularly useful for adjusting the band saw for use with different breeds of cattle or sheep. This facility is particularly useful since it allows for simple adaptation of the apparatus for the relatively limited variability in size and position of spinal column between breeds of the same species without need to replace the whole band saw or drive mechanism of the band saw.

In a further preferred embodiment, to avoid having to replace the whole band saw drive mechanism, where the drive mechanism is of the type having a drive pinion that cooperatively engages with the teeth of the saw band, this drive pinion is suitably interchangeable with readily demountable and replaceable other larger or smaller or differently shaped drive pinions to suit cooperation with different sizes of saw band.

Whereas for use with sheep the saw band is suitably oval to optimise removal of the spinal column while minimising damage to the immediately adjacent muscle tissue, this is less important for cattle due to the different positional relationship between the muscle and the spinal column and it is preferred for cattle that the saw band be more generally circular than oval in shape, maximising strength and fatigue resistance of the saw blade.

By way of further measures to improve strength and fatigue resistance of the saw band/blade, it may preferably be machined from a solid bar rather than flow formed as a tube, in contrast to the prior constructions. Furthermore, the roots of the teeth are suitably shot peened to strengthen them and postpone the onset of any cracking.

In a preferred embodiment of the invention the saw band support is carbide-coated.

To allow for greater control and adjustment of the band saw to suit different breeds, accommodating for different depths of the spinal column between breeds and between species, the band saw is preferably provided with a skid plate to be pressed against the carcass and ride along the spinal column, which skid plate is position adjustable. It may suitably be elevated or lowered relative to a drive mechanism housing/body of the band saw to elevate or lower the blade into the carcass.

### Brief Description of the Drawings

A preferred embodiment of the present invention will now be more particularly described, by way of example, with reference to the accompanying drawings, wherein:
Figure 1 is a perspective view of the preferred embodiment of the band saw;
Figure 2 is a perspective view of the cutting head of the band saw looking up at the saw band;
Figure 3 is a perspective view of the components of the cutting head comprising the saw band, saw band support ring and fastening plate disassembled from each other;
Figure 4 is a side elevation view of the saw band support ring and which is part cut away at an end to illustrate the cross section;
Figure 5 is a side elevation view of the saw band, also part cut away at one end to illustrate the cross section of the saw band;
Figure 6 is an enlarged elevational view of the cutting edge of the saw band illustrating alternating cutting teeth and depth limiting teeth; and
Figures 7A and 7B are a bottom plan view and side elevation view respectively, of a modified version of the band saw which has a depth adjustable depth control skid plate.

### Description of the preferred embodiments

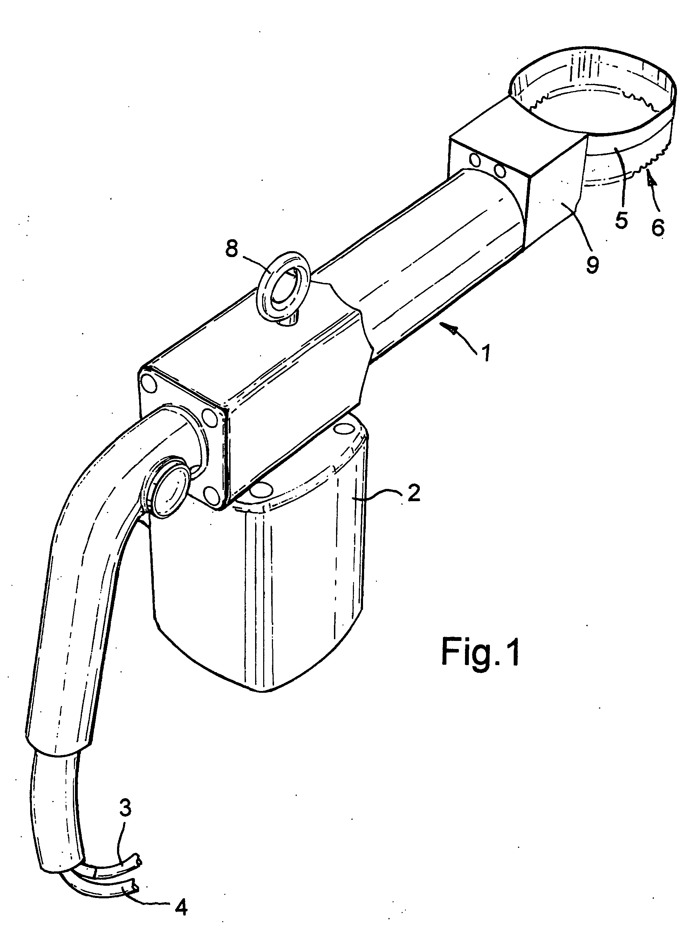

Referring firstly to figure 1, this shows in perspective a preferred embodiment of the band saw for spinal column removal and which comprises a housing, 1 to which an electric motor 2 is mounted powered by an electric cable 3 that enters the housing 1 at the rear. A lubricating oil supply line 4a and a water supply line 4b also enter at the rear of the housing 1 to feed oil and water, respectively, to the cutting head of the band saw.

As with the present inventor's earlier band saws, the housing 1 not only houses the drive mechanism but is also shaped to be reasonably comfortably held and manoeuvred by the operator. The saw is essentially hand held but here may be supported in a counter-balanced manner on a gantry by, for example, hooking or tying a support cable through an eye ring 8 on the housing 1 for that purpose.

The drive mechanism (not shown) may be of any suitable type but preferably such as that described in EP 0,867,118 in which there is a drive pinion at the front end of the housing that is driven by the motor and which engages the cutting teeth of the saw band/blade. The pinion is mounted for rotation about a central longitudinal axis of the band saw and the teeth of the pinion engage between adjacent teeth of the saw band/blade.

The cutting head of the device comprises a support ring 5 that projects from the front end of the housing 1 and which in the illustrated embodiment is generally oval in shape - i.e. an elongate, generally rounded form - around which a saw band/blade 6 is guided so that the blade 6 cycles around this oval path in use. As can be seen from Figure 3, the support ring 5 has a step 7 on its external face 2, to accommodate the blade 6.

The cutting head comprising the support ring 5 and the saw band/blade 6 demountably fastens to a cutting head mounting block 9 of the housing 1, being held in place by a fastening plate 10 that is screwed or bolted to the cutting head mounting block 9 with screws or bolts passing through apertures in the plate 10 and then through apertures 11 in the support ring 5 into the mounting block 9.

The cutting head 5, 6 may be demounted as a unit allowing it to be interchanged with one of a number of other cutting heads that are sized and configured to suit different breeds of animal or species of animal. Suitably, however, the cutting head 5,6 is assembled with the mounting block 9 as a demountable unit 5,6,9 that is demountable as a whole from the housing 1 and drive mechanism for interchanging or replacement. Although not immediately apparent from the drawings, in the preferred embodiment the drive pinion is substantially fully encased within the housing 1, enclosed by the front end of the mounting block 9. The cutting head 5,6 passes into a slot or aperture in the front face of the mounting block 9 to mesh with the encased drive pinion.

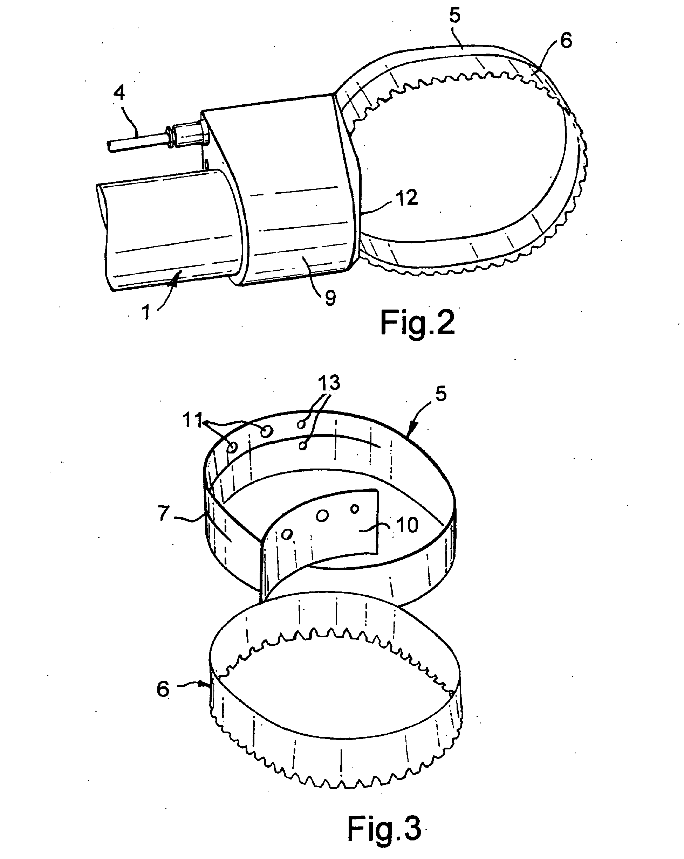

A further feature to be noted from figure 2 is that the mounting block 9 of the housing 1 has a sculpted part 12 to its front end that serves as an integral skid plate to ride along the spinal column of the animal carcass in use.

From figure 2 it can also be seen that an oil lubrication pipeline 4 enters the rear of the cutting head mounting block 9 to supply lubricating oil to the cutting head 5,6. A water pipeline, not shown, also delivers water to the cutting head for cooling it when it is in operation. The oil, which is suitably of food grade (process grade), is delivered onto the support ring 5 adjacent the mounting apertures 11. This oil may pass through small apertures 13 in the support ring 5 but importantly it is delivered into a channel 14 that is at or adjacent the step 7 and suitably runs along the step 7 and then follows an inclined path 15, whereby the whole channel 14, 15 resembles a spiral or part spiral, and whereby the lubricating oil is distributed to spread from the step 7 down the face of the support ring 5 over which the saw band 6 mounts. The lubricating oil is therefore made to flow toward the cutting edge of the saw band 6 and suitably in the direction of rotation of the cutting band 6, washing any bone dust and detritus forwardly away from the support ring 5, saw band 6 and teeth of the saw band 6.

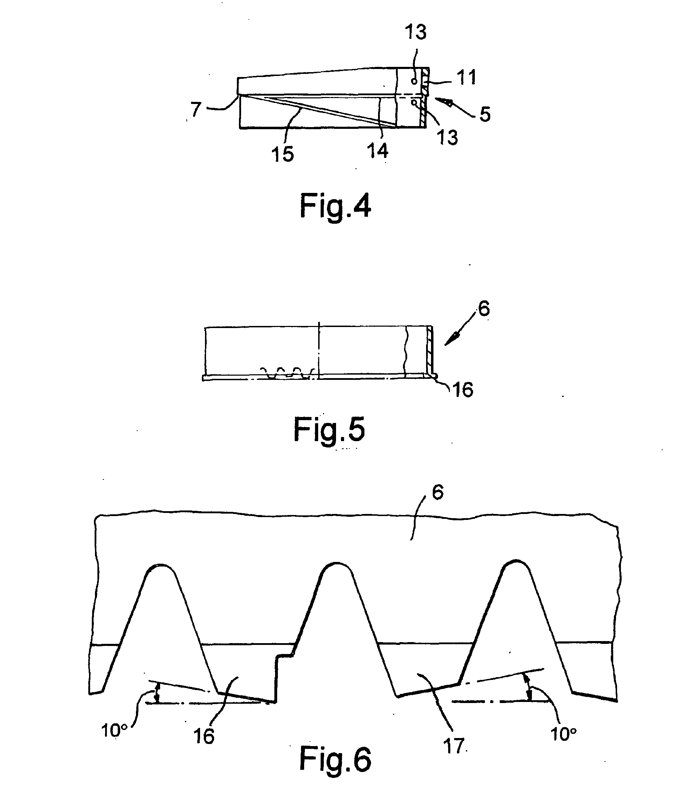

Turning now to figure 5, this illustrates the saw band 6 in side elevation and showing only a short length of the serrations that comprise the cutting edge of the saw band 6. These serrations are shown in more detail in figure 6 and comprise alternating cutting teeth 16 and cutting depth limiting teeth 17. The shape of the teeth is optimised for being directly driven by a pinion in the manner first disclosed in EP 0,867,118. The cutting depth limiting teeth 17 that alternate with the cutting teeth 16 differ from the cutting teeth in a number of respects. Firstly, they are marginally shorter than the cutting teeth 16 to allow the cutting teeth 16 a small depth of cut. Secondly, these cutting depth limiting teeth 17 are not for cutting and are, therefore, blunt and their top edge (their edge farthest from the root of the tooth), inclines toward the tooth's root in the direction of travel whereas the top edge of each cutting tooth 16 inclines away from the root in the direction of travel. In the illustrated embodiment the angle of inclination is of the order of ten degrees.

The depth limiting teeth 17 are suitably shorter than the cutting teeth 16 by a depth of the order of 0.1 or 0.2 mm.

In the illustrated embodiment the saw band/blade 6 has 40 teeth of which half are cutting teeth and it is suitably of the order of 85 mm in longest dimension of the oval saw band 6 for use to remove the spinal column of cattle carcasses.

A further feature of the teeth 16, 17 that will be apparent from figure 5 is that they have a 'T'-shaped head/top end, when viewed in cross section. This enables the cutting teeth 16 to cut a channel through the carcass that is wide enough to accommodate the support ring 5 as well. In contrast to the blade tipped teeth of PCT WO 97/39634, the teeth in the present invention are substantially more robust and provide a greater cutting area of the individual cutting teeth 16, which is especially important when allowance is made for lesser number of cutting teeth 16 due to the alternation with the depth-limiting teeth 17.

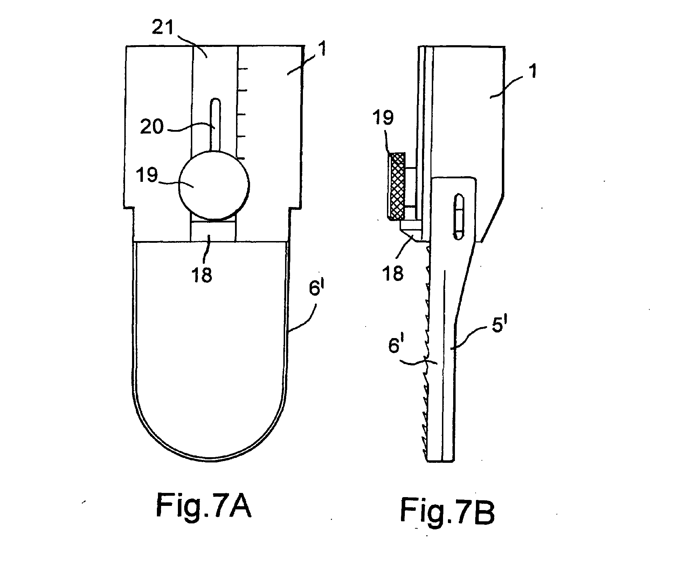

Turning finally to figures 7A and 7B, these illustrate a mechanism for adjustably controlling the depth of a depth-adjustable skid plate 18. Here the housing 1 has the independantly adjustable skid plate 18 moveable longitudally of the housing 1 by unthreading a headed securing bolt 19 to allow relative movement between the bolt 19 and a longitudinal slot 20 of a mounting plate 21 of the skid plate 18. This depth adjustable skid plate 18 gives the operator the facility to adjust the position of the device relative to the depth of the spinal column within the carcass.

Whereas in the various illustrations herein the support is shown as a support ring ie a full annulus, it may, in principle, define only part of a ring, albeit risking compromising performance ,

Whether the support is a full annulus or not, in one notable preferred alternative configuration not illustrated the saw band/blade is mounted to the support not on a shoulder on the outer wall (radially outer face) of the at least part annular support but is instead mounted on the inner wall/ radially inner face of the support. Under some operating conditions this may provide operational benefits in further reducing risk of jamming of blade teeth on the bone of the carcass being stripped.

## Claims

1. A band saw for separating at least part of the spinal column from an animal carcass and which comprises an endless saw band mounted to a support for cyclic movement along a closed path, the support being constructed such that part of the material being cut can pass through the region defined within the cyclic path of the saw band; and means for driving the saw band, **characterised in that** the saw band is provided with cutting depth limiting means comprising at least one shoulder or projection adjacent the cutting teeth of the saw band which is/are blunt and shorter than the cutting teeth.

2. A band saw as claimed in claim 1, wherein the depth limiting means comprises a plurality of depth limiting teeth.

3. A band saw as claimed in claim 2, wherein the depth limiting teeth are positioned, at intervals, between cutting teeth.

4. A band saw as claimed in claim 3, wherein the depth limiting teeth alternate with the cutting teeth .

5. A band saw as claimed in claim 1, wherein the depth limiting teeth have a form substantially similar to the cutting teeth

6. A band saw as claimed in any preceding claim, wherein the depth limiting teeth have a top edge that slopes towards their bottom edge (root) in the direction of cyclic movement of the saw blade, unlike the cutting teeth.

7. A band saw as claimed in any preceding claim, wherein a lubricating oil channel is provided in the band saw between the support for the saw band and the saw band itself.

8. A band saw as claimed in claim 7, wherein a positive displacement pump pumps and meters supply of lubricating oil or water to the lubricating oil channel.

9. A band saw as claimed in claim 7 or 8, wherein the lubricating oil channel is formed in the cylindrical outer face of the support.

10. A band saw as claimed in claim 7,8 or 9, wherein the channel is in a spiral or part spiral that extends towards the cutting edge of the saw band and that directs the oil to sweep toward the teeth.

11. A band saw for separating at least part of the spinal column from an animal carcass and which comprises an endless saw band mounted to a support for cyclic movement along a closed path, the support being constructed such that part of the material being cut can pass through the region defined within the cyclic path of the saw band; and means for driving the saw band, **characterised in that** the saw band is provided with a lubricating oil channel between the support for the saw band and the saw band itself.

12. A saw band/blade for use in the band saw of any of claims 1 to 11 **characterised by** having a cutting depth limiting means comprising at least one shoulder or projection adjacent the cutting teeth of the saw band which is/are blunt and shorter than the cutting teeth.

13. A band saw as claimed in any of claims 1 to 11, wherein the band saw has an electric motor.

14. A band saw as claimed in any of claims 1 to 11 or 13, wherein the band saw has a cutting edge comprising the support for the saw band and the saw band itself and wherein this cutting head is demountable from a main body/drive mechanism housing of the band saw to allow interchangeability of cutting heads.

15. A band saw as claimed in any of claims 1 to 11, 13 or 14 wherein, to avoid having to replace the whole band saw drive mechanism, the drive mechanism is of the type having a drive pinion that cooperatively engages with the teeth of the saw band, this drive pinion is interchangeable with readily demountable and replaceable other larger or smaller or differently shaped drive pinions to suit cooperation with different sizes of saw band.

16. A band saw as claimed in any of claims 1 to 11, 13, 14 or 15 wherein for cattle the saw band is generally circular, not oval, in shape.

17. A band saw as claimed in any of claims 1 to 11, or 13 to 16 wherein the saw band/blade is machined from a solid bar.

18. A band saw as claimed in any of claims 1 to 11, or 13 to 17 wherein the band saw is provided with a skid plate to be pressed against the carcass and ride along the spinal column, which skid plate is position adjustable.

19. A band saw as claimed in claim 19 wherein the skid plate may be elevated or lowered relative to a drive mechanism housing/body of the band saw to elevate or lower the blade into the carcass.

20. A band saw as claimed in any of claims 1 to 11, or 13 to 19 wherein the support is annular or at least forms part of an annulus and the saw band mounts to the inner wall of the at least part of an annulus.
